# EUROPEAN PATENT APPLICATION

(11) **EP 2 669 569 A1**
(43) Date of publication of application: **04.12.2013**
(21) Application number: 12275078.9
(22) Date of filing: 28.05.2012
(51) Int. Cl.: F21S 8/00, G01J 1/04, G01J 1/08, F21V 11/08, F21V 11/14, F21V 11/16, F21V 14/08, G02B 26/02

(54) **Method and device for simulating a light source having a light intensity profile that varies in time**

(71) Applicant: MBDA UK Limited, Stevenage, Hertfordshire SG1 2DA (GB)
(72) Inventor: The designation of the inventor has not yet been filed
(74) Representative: BAE SYSTEMS plc Group IP Department

(57) **Abstract**

A method and device for simulating a light source having a light intensity profile that varies in time. The method includes the steps of: providing a light source; using a mask to at least partially block light emitted by the light source; and adjusting the position of the mask in accordance with an electrical signal representative of the light intensity profile so as to adjust the extent to which the mask blocks light from the light source, and thereby providing the light intensity profile that varies in time. The device comprises: a mask to at least partially block light from a light source; and an actuator for adjusting the position of the mask in accordance with an electrical signal representative of the light intensity profile so that the extent to which the mask blocks light from the light source is adjustable to provide the light intensity profile that varies in time.

## Description

### FIELD OF THE INVENTION

The present invention concerns devices and methods for simulating a light source having a light intensity profile that varies in time. Example embodiments of the invention relate in particular, but not exclusively, to devices and methods for simulating a countermeasure signal, i.e. a particular variation in time of the intensity of an electromagnetic signal radiated by a countermeasure.

### BACKGROUND ART

A key component for electro-optic simulation of light sources, such as countermeasures, has been the use of arc lamps as sources having broad waveband output, particularly in the infra-red. In the past, arc lamps have been available that have an internal configuration specifically designed for electronic modulation. However, such arc lamps are now obsolete and difficult to source. A possible replacement light source would be a commercially available arc lamp with a broadband output, but with an internal configuration designed to achieve a stable rather than easily modulated arc. Such arc lamps cannot achieve the depth of modulation (i.e. the range of variation of intensity) required for electro-optic simulation of a light source having a light intensity profile that varies in time, such as the light intensity profile from a countermeasure. In particular, the high ambient output of such arc lamps makes accurate simulation of a light source that starts at very low, or zero, intensity and rapidly produces a high intensity light, for example the lighting of a flare, very difficult, if not impossible.

The present invention seeks to mitigate the above-mentioned problems. Alternatively or additionally, the present invention seeks to provide an improved device and method for simulating a light source having a light intensity profile that varies in time.

### DISCLOSURE OF THE INVENTION

According to a first aspect of the invention, there is provided a method of simulating a light source having a light intensity profile that varies in time, the method including the steps of: providing a simulation light source; using a mask to at least partially block light emitted by the simulation light source; and adjusting the position of the mask in accordance with an electrical signal representative of the light intensity profile so as to adjust the extent to which the mask blocks light from the simulation light source, and thereby providing the light intensity profile that varies in time.

Where previous methods have involved applying electrical signals to a simulation light source so as to vary the intensity of the simulation light source itself, the present invention applies an electrical signal to adjust the position of a mask. The mask may be integrated with the simulation light source, thus providing a compact, self-contained system. The mask may be arranged in front of the simulation light source, which would allow the mask to be used with a number of different light sources. By using a mechanical system, i.e. a moving mask, the present invention avoids the need to modulate the output from the simulation light source itself and can thus be used with commercial off-the-shelf (COTS) light sources, which cannot be modulated sufficiently to simulate the light intensity profile. The range of intensities achievable with the method, and particularly the ability to switch quickly from a low or zero intensity to a higher intensity, may be advantageous over the electrical modulation of a COTS light source. The simulation light source may be an arc lamp. In particular, the simulation light source may be a light source having a substantially uniform light intensity profile over time. Thus the invention may be said to substitute mechanical adjustment of a mask for electrical adjustment of the simulation light source intensity, thus increasing the viable options for use as the simulation light source. For example, the invention can make use of low cost, low pressure arc lamps with broadband outputs, whilst still achieving very high modulation dynamic ranges.

It will be appreciated that the simulation may be viewed from a target region and that the mask may be arranged so as to at least partially block light from the simulation light source from reaching the target region. In directions away from the target region, the light from the simulation light source may be unblocked. However, in many cases it will be desirable to avoid leakage of light around the mask. That may be achieved, for example, by providing a surround to the light source that prevents light from radiating except in the target direction. In some embodiments the method may include the step of collimating the beam from the light source. By collimating the beam along the target direction, leakage of light in other directions may be prevented.

The invention is particularly suited to the simulation of countermeasure signals, i.e. the variation in intensity over time of the electromagnetic radiation produced by a countermeasure. In some examples, the simulated countermeasure may be an infra-red flare, whose light intensity profile over time may be characterised by a fast initial rise from zero intensity to a high intensity, followed by a gradual fade in intensity to a low or zero intensity level. Thus the light source being simulated is preferably a countermeasure signal, and the applied electrical signal is preferably a signal representative of the intensity of the countermeasure signal. A feature of the simulation of countermeasure signals is the need for a very fast rise time, for example simulating the lighting of a flare, followed by a gradual fade, for example simulating the decay of the flare. Thus a method for simulating countermeasure signals needs to be able to transition from no light to a maximum intensity with fast rise time, and then to be able to dim the intensity with sufficient resolution to produce an intensity profile with an apparently smooth gradient, rather than a series of clearly resolvable discrete steps. Many COTS light sources are unable to provide both the fast step change from no light to light and also the control of the gradual dimming. By using the present invention, such light sources can still be used to simulate countermeasure signals, because the simulation light source can be operated at a substantially uniform intensity and the mask can be operated to produce the desired intensity profile.

In preferred methods, the position of the mask can be adjusted from a closed position, in which substantially all the light from the simulation light source is blocked by the mask, to an open position, in which a minimum amount of light from the simulation light source is blocked by the mask, in a time of not more than 15 ms, preferably not more than 10 ms and even more preferably not more than 5 ms. That rise time may be sufficient, for example, for simulating the rise time of a countermeasure signal.

The rise time may also be considered in frequency terms. The variation in time of the intensity of the light source being simulated can be represented as a spectrum of frequencies, by means of a Fourier transform. Features of the intensity profile occurring over short timescales will be represented by higher spectral frequencies in the Fourier transformation of the intensity profile. The masking device will act as a low-pass filter in the frequency domain, with the cut-off frequency of the filter related to the time in which the mask is moveable from the closed position to the open position. Higher spectral frequency components in the Fourier transform of the signal to be simulated will require quicker adjustments of the mask. Preferably the mask has a frequency response with an upper frequency cut-off of at least 66 Hz, preferably 70 Hz, more preferably 80 Hz, yet more preferably 100 Hz and even more preferably 200 Hz.

It will be appreciated that in the open position the mask will still block some of the light coming from the simulation light source. The open position is defined as the position of the mask at which the amount of light coming from the light source via the mask is the maximum amount of light that can come from the light source via the mask. In other words, there is no position of the mask at which more light comes from the light source via the mask than does so in the open position.

The position of the mask may be adjusted by means of an actuator. For example, the position of the mask may be adjusted using a piezo-electric actuator. An actuator that drives a change in the position of a mask in response to an electrical signal may produce a faster response time and better prospects for finely resolved control than an electrically varied simulation light source. In particular, the response time and resolution are controlled by the properties of the actuator and the dimensions of the mask, which may allow for greater flexibility and choice than is available in COTS light sources.

The mask may comprise a plurality of transmission regions and the method may include the step of adjusting the position of the mask so as to adjust the extent to which light is transmitted from the light source via the transmission regions. For example, the mask may be a plate and the transmission regions may be orifices cut through the plate. Such a mask is straightforward and cost-effective to manufacture and can be made using materials that provide sufficient stiffness, while providing a low mask mass. The holes may be laser cut, which may be advantageous in providing uniformity of the hole size and shape. The transmission regions may be transparent windows in an opaque plate. For example, if the light intensity profile of the light source being simulated is an infra-red light intensity profile, then the simulation light source may be an infra-red light source, and the opaque plate may comprise an infra-red blocker, wherein the opaque areas of the plate comprise the infra-red blocker and the transparent window areas of the plate do not comprise the infra-red blocker. The use of such opaque plates with transparent windows is particularly suited to situations where the beam from the simulation light source is cold enough for the substrate of the plate to withstand thermal heating effects. The advantage of such plates is that it may be easier to produce unusually shaped transmission regions. For example, the opaque plate may comprise a silicon substrate.

The transmission regions may be square. Opaque plates with transparent windows may be particularly suitable for producing a mask with square transmission regions. The use of square transmission regions, however they are made, may be advantageous as a linear relationship between mask position and light intensity may then be achieved. The transmission regions in some embodiments may be round. Round transmission regions may be straightforward to produce. Round transmission regions may be particularly suitable for masks in which the transmission regions are holes in a plate.

The dimensions of the transmission regions may depend on a number of factors and compromises may need to be made. The minimum dimension (i.e. the minimum dimension of the transmission regions in the plane of the mask) of the transmission regions may be greater than the size at which diffraction effects become significant at the wavelength of the light source being simulated. For example, the minimum dimension of the transmission regions may be at least 50 times, preferably at least 100 times and even more preferably at least 200 times the wavelength of the light source being simulated. For example, the minimum dimension of the transmission regions may be at least 50 micrometres, preferably at least 100 micrometres and even more preferably at least 200 micrometres. However, large transmission region dimensions may require large movements of the mask in order to adjust the intensity of the light. Also, the dimensions and spacing of the transmission regions should be small compared to the resolution of the system viewing the simulation light source, so that the individual transmission regions cannot be discriminated. Preferably the mask has a large number of small transmission regions. For example, the mask may have greater than 500, preferably greater than 1000 and more preferably greater than 2000 transmission regions. The maximum dimension (i.e. the maximum dimension of the transmission regions in the plane of the mask) of the transmission regions may be less than 1 millimetre, preferably less than 500 micrometres and more preferably less than 400 micrometres. The transmission regions may be of substantially the same dimensions as each other. The transmission regions may be round transmission regions, in which case the minimum dimension of the transmission regions will equal the maximum dimension of the transmission regions (both being the diameter of the transmission regions). The transmission regions may be square transmission regions, in which case the maximum dimension (the diagonal), will be greater than the minimum dimension (the edge length). Other geometries of transmission regions, for example slits, ovals, triangles and polygons, will have other relationships between the maximum and minimum dimensions. However, for a shape of transmission region, the maximum dimension of the transmission regions may be in the range of from 50 micrometres to 1 millimetre, preferably from 100 micrometres to 500 micrometres and more preferably from 200 micrometres to 400 micrometres. Also, the minimum dimension of the transmission regions may be in the range of from 50 micrometres to 1 millimetre, preferably from 100 micrometres to 500 micrometres and more preferably from 200 micrometres to 400 micrometres. The skilled person will be able to determine the size of a transmission region, of a particular shape, so that one or both of the minimum and maximum dimension criteria are met, as desirable.

The method may include the step of expanding the beam from the simulation light source, before the beam reaches the mask. By expanding the beam it may be possible to use a mask having a greater area, which may be advantageous in providing the performance required to simulate the light intensity profile.

The position of the mask may be adjusted by tilting the mask so that the apparent size of the transmission regions when viewed from the simulation light source is altered. In such a system, the angle of the mask to the target direction will determine the apparent size of the transmission regions. For example, when the mask is perpendicular to the target direction, the full face of the transmission regions will be presented to the simulation light source and a maximum amount of light will be transmitted via the transmission regions. Thus the mask will be in the open position. As the mask is tilted so that the acute angle between the mask and the target direction reduces, the apparent size of the transmission regions will be reduced. The rate at which the size of the transmission regions decreases with decreasing angle will depend on the thickness of the mask. A thicker mask will result in greater reductions in apparent size with decreasing angle. Thus a thicker mask will result in faster rise times (the time for the mask to move from the closed position to the open position), but reduced resolution (the precision with which a particular intensity can be produced). When the angle of the mask is so that the thickness of the mask means that the transmission regions are completely obscured when viewed from the simulation light source all the light is blocked and the mask is in the closed position.

Advantageously, when the position of the mask is adjusted by tilting the mask so that the apparent size of the transmission regions when viewed from the simulation light source is altered, the pitch of the transmission regions in a direction (i.e. the spacing between centres of the transmission regions in that direction in the plane of the mask) is less than twice the transmission region dimension in that direction. Preferably that is true for all directions in the plane of the mask. An advantage of the tilting system is that the transmission regions are obscured by the thickness of the mask in the closed position. As a result, the pitch of the transmission regions in a direction can be less than twice the transmission region dimension in that direction and the mask can still be placed in a closed position. The proportion of the area of the mask that is transmission regions determines the percentage of the light from the simulation light source that is transmitted by the transmission regions when the mask is in the open position. If the pitch of the transmission regions can be reduced, while maintaining the ability to place the mask in a closed position, intensity profiles with larger maximum intensities can be simulated with a given light source.

The position of the mask may be adjusted by translating the mask with respect to a second mask having a plurality of transmission regions, so that the overlap of the transmission regions of the two masks when viewed from the simulation light source is altered. Such a system may be easier to implement and more robust that a tilting system, at least because the angular momentum of the mask and the resultant twisting forces on the actuator do not need to be considered. If the transmission regions are square, there will also be a linear relationship between mask position and light intensity, which may allow more simple control. Preferably the two masks move in opposite directions in response to the electrical signal. In that way, the distance that the masks need to be moved to go from no overlap of transmission regions (the closed position) to complete overlap of transmission regions (the open position) will be halved and the rise time will be reduced correspondingly.

Preferably the transmission regions in the two masks are identical. In that way, the masks can overlap fully in all transmission regions in the open position, which may allow a greater proportion of the light from the simulation light source to be transmitted via the transmission regions and thus increase the maximum intensity that can be simulated with a given light source compared to masks with non-identical transmission regions. Preferably the pitch of the transmission regions in the direction of translation of the mask is greater than twice the transmission region dimension in that direction. Thus, in the closed position, any overlap between the transmission regions can be prevented and all the light from the simulation light source can be blocked. In other directions it may be that in some embodiments the pitch of the transmission regions in a direction is greater than twice the transmission region dimension in that direction. In some embodiments it may be that the pitch of the transmission regions in a direction other than the translation direction is less than twice the transmission region dimension in that direction other than the translation direction. In that way, a greater proportion of the light may pass through the mask in the open position, while still maintaining zero passage of light in the closed position. A fast response time may be important in simulating some signals. Thus, advantageously, the first mask is translated relative to the second mask by a distance not more than 100 micrometres greater than the size of the transmission regions. Such a translation allows the mask to move from the closed to the open position, with 100 micrometres of overlap to ensure the closed position blocks all light, whilst still allowing for a quick response on opening the mask.

According to a second aspect of the invention, there is provided a device for simulating a light source having a light intensity profile that varies in time, the device comprising: a mask to at least partially block light from a simulation light source; and an actuator for adjusting the position of the mask in accordance with an electrical signal representative of the light intensity profile so that the extent to which the mask blocks light from the simulation light source is adjusted to provide the simulated light intensity profile that varies in time.

Preferably, the device further comprises the simulation light source. The simulation light source and the mask may be integrated in a single device or they may be in separate parts of a device.

The device may be suitable for carrying out the method of the first aspect of the invention. The device may be suitable for simulating the light intensity profile of a countermeasure signal.

The device may comprise the simulation light source, which may be a light source having a substantially uniform light intensity profile over time, for example an arc lamp.

The mask may comprise a plurality of transmission regions and the actuator may be configured so as to, in operation, adjust the position of the mask so as to adjust the extent to which light is transmitted from the simulation light source via the transmission regions.

The actuator may be configured to adjust, in operation, the position of the mask by tilting the mask so that the apparent size of the transmission regions when viewed from the simulation light source is altered.

The pitch of the transmission regions may be less than twice the transmission region dimension in all directions in the plane of the mask.

The actuator may be configured to adjust, in operation, the position of the mask translating the mask with respect to a second mask having a plurality of transmission regions, so that the overlap of the transmission regions of the two masks when viewed from the simulation light source is altered. The device may comprise two actuators, one associated with each of the masks, the actuators being configured to move, in operation, the two masks in opposite directions in response to the electrical signal. The transmission regions in the two masks may be identical. The pitch of the transmission regions may be greater than twice the transmission region dimension in the direction of translation of the mask. The actuator or actuators may be configured so that, in operation, the first mask is translatable relative to the second mask by a distance not more than 100 micrometres greater than the size of the transmission regions.

The actuator may be a piezo-electric actuator.

The device may be configured so that the position of the mask is adjustable from a closed position, in which substantially all the light from the simulation light source is blocked by the mask, to an open position, in which a minimum amount of light from the simulation light source is blocked by the mask, in a time of not more than 15 ms.

The mask may be a plate and the transmission regions may be orifices cut through the plate. The orifices may be laser-cut.

The transmission regions may be transparent windows in an opaque plate. The simulation light source may be an infra-red light source, and the opaque plate may comprise an infra-red blocker, wherein the opaque areas of the plate comprise the infra-red blocker and the transparent window areas of the plate do not comprise the infra-red blocker. The opaque plate may comprise a silicon substrate.

The transmission regions may have a size of from 100 micrometres to 500 micrometres.

The plurality of transmission regions may include at least 2000 transmission regions.

The light source to be simulated may be a countermeasure signal, and the electrical signal may be a signal representative of the intensity of the countermeasure signal.

The device may comprise optics for expanding the beam from the simulation light source, before the beam reaches the mask.

The device may include optics for collimating the beam from the simulation light source, before the beam reaches the mask.

It will of course be appreciated that features described in relation to one aspect of the present invention may be incorporated into other aspects of the present invention. For example, the device of the invention may incorporate any of the features described with reference to the method of the invention and *vice versa.*

### BRIEF DESCRIPTION OF THE DRAWINGS

Embodiments of the present invention will now be described by way of example only with reference to the accompanying schematic drawings of which:
Figure 1 is a schematic view of a system for carrying out a method according to a first embodiment of the invention;
Figure 2 is a view of a mask for use in a method according to a second embodiment of the invention;
Figure 3 is a series of views of the mask of Figure 2;
Figure 4 is a series of views of mask holes in various positions;
Figure 5 is a plot of normalised aperture area against array overlap; and
Figure 6 is a series of views of a mask for use in a method according to a third embodiment of the invention.

### DETAILED DESCRIPTION

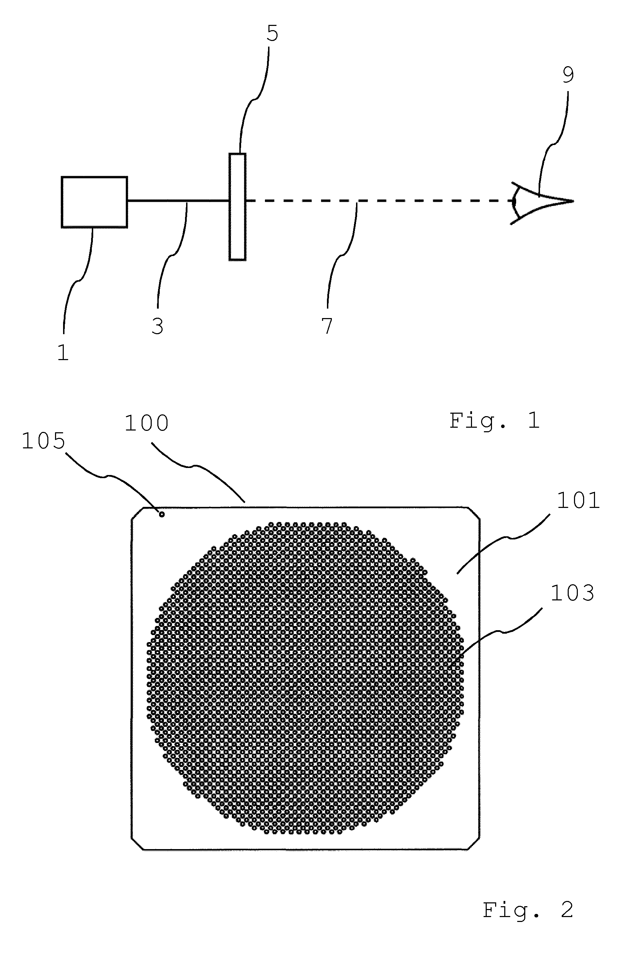

In Figure 1 a viewer 9 is viewing a simulation of a light source having an intensity profile that varies in time. A simulation light source 1 having a substantially uniform intensity profile over time is provided. Between the light source 1 and the viewer 9 is a mask 5. Light 3 from the light source 1 is incident upon the mask 5. Light transmitted via the mask 5 proceeds as a light beam 7 towards the viewer 9. The viewer 9 is the target of the simulation and light 3 and light beam 7 together indicate the target direction. The mask 5 is placed so that light from the light source 1 must pass via the mask 5 to reach the viewer 9. The position of the mask 5 is adjustable so as to adjust the extent to which the light 3 from the light source 1 is transmitted via the mask 5. Thus, while the intensity of the light 3 from the light source 1 is constant, the intensity of the light beam 7 observed by the viewer 9 varies depending on the position of the mask 5. The position of the mask 5 is adjusted in accordance with an electrical signal so that the intensity of the light beam 7 observed by the viewer 9 matches the intensity profile of the light source being simulated.

In Figure 2 a mask 100 comprises a plurality of transmission regions 103. The mask 100 is in the form of a plate 101 and the transmission regions 103 are holes cut through the plate 101 using laser cutting. The mask 100 includes around 2470 transmission regions 103. The transmission regions 103 are substantially identical to each other and are arranged in a regular grid pattern across the central part of the plate 101. There is an alignment hole 105 at one edge of the plate 101 to assist with aligning the mask 100 with another mask in a device, not shown. The transmission regions 103 have a diameter of 300 micrometres.

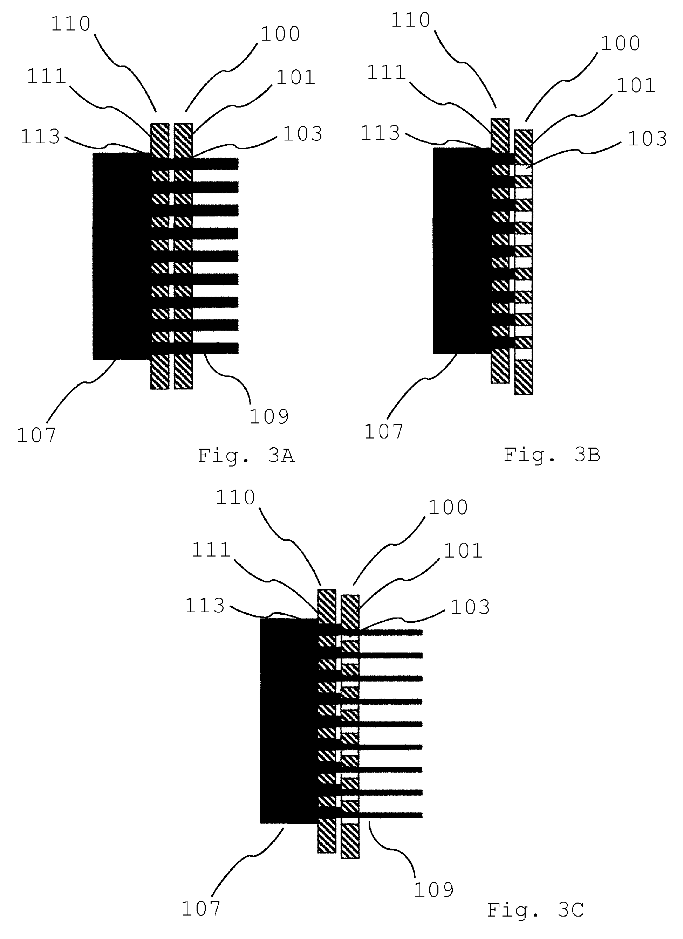

In Figures 3A to 3C a variable intensity light beam is produced. In Figure 3A, the mask 100 is aligned with another, substantially identical mask 110. The alignment is so that light 107 coming from a substantially uniform light source, not shown, is incident upon the mask 110. Some of the light 107 strikes the plate 111 of the mask 110 and is blocked. The remaining light 107 passes through the transmission regions 113 (which are holes in the plate 111) and also passes through the transmission regions 103 in the mask 100 because of the alignment of the mask 100 with the mask 110. Thus the output beam 109 has a maximum intensity, due to the alignment of the transmission regions 113 and 103 and the mask 100 is said to be in the open position. In one embodiment, the size and spacing of the holes in the plates 101 and 111 is so that 38% of the light 107 passes through to form the output beam 109. The light 107 is collimated so that the output beam 109 follows the target direction and leakage of light is largely avoided.

In Figure 3B, the position of the mask 100 has been adjusted so that there is no overlap between the transmission regions 103 in the mask 100 and the transmission regions 113 in the mask 110 when viewed from the light source, i.e. when viewed along the direction of the collimated light 107. Thus any light 107 that passes through the transmission regions 113 in the mask 110 will strike the plate 101 of the mask 100 and all the light is blocked. The mask 100 is thus in the closed position.

In Figure 3C, the position of the mask 100 has been adjusted so that there is a partial overlap between the transmission regions 113 in the mask 110 and the transmission regions 103 in the mask 100. Thus some of the light 107 that passes through the transmission regions 113 in the mask 110 will also pass through the transmission regions 103 in the mask 100, while the rest of the light that passes through the transmission regions 113 in the mask 110 will strike the plate 101 of the mask 100. The intensity of the output beam 109 is therefore less than the intensity of the output beam in Figure 3A. By adjusting the position of the mask 100, the extent of overlap between the transmission regions 113 and 103 can be adjusted and hence the intensity of the output beam 109 can be adjusted. In some embodiments, not shown, the position of both mask 110 and mask 100 can be adjusted simultaneously in opposite directions. It will be appreciated that in those embodiments the mask 100 and the mask 110 need only be moved half the distance that the mask 100 moves in Figures 3A and 3B in order to move from the open position to the closed position.

The mask 100 is moved using a piezo-electric actuator driven with a voltage proportional to the desired offset position. If that control voltage follows a profile the intensity of the output beam 109 will follow that profile (with a sinusoidal variation for circular transmission regions 103 and 113). When the actuator is driven with a top hat profile, the output beam 109 will be either minimum or maximum, transitioning rapidly between the two states and acting as a shutter.

In one embodiment, the transmission regions 103 and 113 are 300 micrometre diameter holes in plates 101 and 111, while the actuator has a maximum deflection of 400 micrometres. The actuator moves the mask 100 over a 300 micrometre range so that the mask 100 can be moved from the closed position to the open position at a frequency of 80 Hz. That frequency is sufficient to simulate the intensity profile of countermeasure flares.

In order for the mask 100 to completely block all the light 107 passing through the transmission regions 113, it follows that the mask 100 must have more material area than transmission region area (e.g. hole area). Thus the pitch of the transmission regions 103 must be greater than twice the diameter of the transmission regions 103 in the direction in which the mask 100 is moved.

When simulating infra-red sources, the light source producing the light beam 107 will be an infra-red light source. In such cases it is important to minimise the heating of the plates 111 and 101 so that they do not appear as infra-red sources and interfere with the observation of the output beam 109.

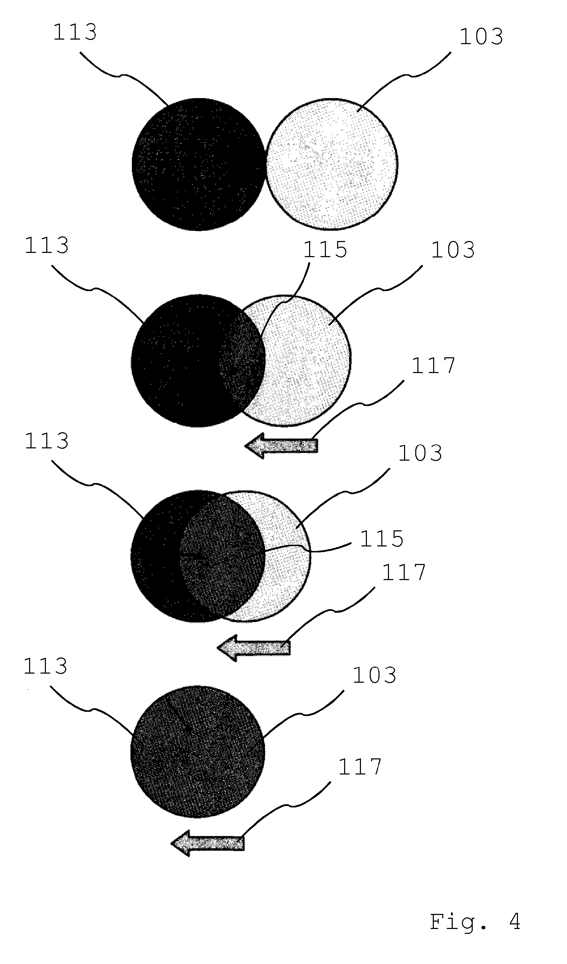

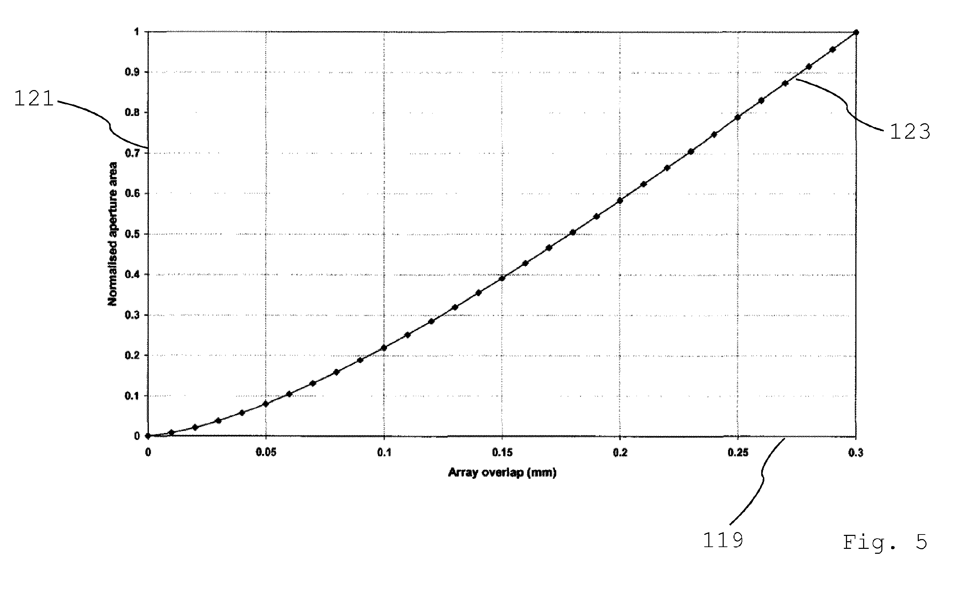

In Figure 4 a transmission region 113 on one mask and a transmission region 103 on another mask start with no overlap. As a result, all light is blocked, and the mask is operating at the left hand end of plot 123 in Figure 5. As the mask with transmission region 103 moves in the direction 117, an area of overlap 115 between transmission regions 113 and 103 develops. The normalised aperture area 121, i.e. the fraction of the transmission region 103 that is in the area of overlap 115, increases non-linearly in Figure 5 as the array overlap 119 increases. Thus the plot 123 is not straight. That is a result of the circular shape of the transmission regions 113 and 103. As the mask with transmission region 103 continues to move in the direction 117 the area of overlap 115 continues to increase in accordance with plot 123 until the two transmission 103 and 113 regions are completely overlapping. At that point the open position is reached and a maximum intensity of light is transmitted. If the mask with transmission region 103 continues to move in the direction 117, not shown, the area of overlap will start to decrease again.

In some embodiments square transmission regions are used. If square transmission regions are used and the direction of mask movement is perpendicular to an edge of the squares, a linear relationship between array overlap and normalised aperture area will be obtained. In some embodiments where square transmission regions are used they will be created using a mask on an optical substrate material and will be useful where the optical beam is cold enough for the substrate to withstand thermal heating effects.

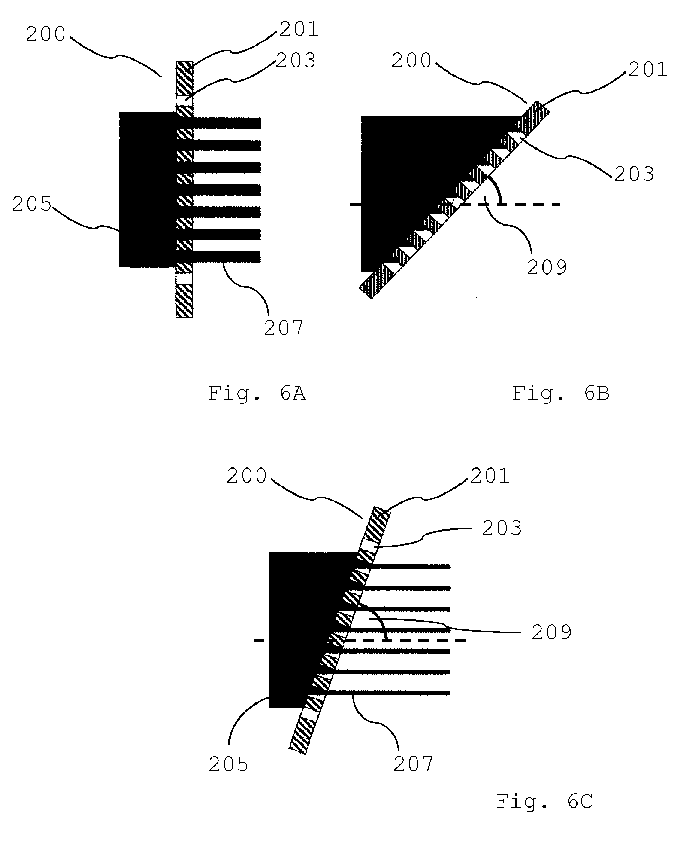

In Figure 6 a mask 200 is used to vary the intensity of a substantially uniform input light beam 205. The input light beam 205 is collimated so as to be directed toward the point from which the simulation of the variable intensity profile is to be observed. In other words, the beam 205 is collimated along the target direction. The mask 200 comprises a plate 201 comprising plurality of transmission regions 203. The transmission regions 203 are in the form of holes laser cut through the plate 201. In Figure 6A, the plate 201 is at right angles to the input beam 205 and the apparent size of the transmission regions 203, when viewed along the light beam 205, is equal to the true size of the transmission regions 203. Thus the mask 200 is in the open position and the output beam 207 has a maximum intensity. The transmission region 203 pitch can be smaller than in the translational embodiment described above, because the transmission regions 203 will not be blocked off by a second mask in the closed position. Thus the intensity of the output beam 207 may be a larger percentage of the intensity of the input beam 205. In Figure 6B the mask 200 has been tilted so that the mask 200 forms an acute angle 209 with the input beam 205. The thickness of the plate 201 is such that the transmission regions 203 appear completely closed when viewed along the direction of the input beam 205 and all the light is blocked. The mask 200 is thus in the closed position. In Figure 6B the mask 200 is at an intermediate angle 209 between the closed and open positions. The thickness of the plate means that the apparent size of the transmission regions 203 when viewed along the direction of the input beam is smaller than the true size of the transmission regions 203. As a result, a reduced amount of light 205 passes through the transmission regions 203 compared to the open position and the output beam 207 has a reduced intensity compared to the open position.

There will be a non-linear relationship between the angle 209 of the mask 200 and the intensity of the output beam 207. That relationship will depend on the thickness of the plate 201 and the diameter of the transmission regions 203. If a larger ratio of transmission region 203 diameter to plate 201 thickness is chosen, a larger change in angle 209 will be required to reach the closed position. However, a given change in angle 209 will result in a smaller change in intensity, so the control of intensity at intermediate angles will be more precise. In contrast, if a smaller ratio of transmission region 203 diameter to plate 201 thickness is chosen, a smaller change in angle 209 will be required to reach the closed position. That will mean that the mask can be moved more quickly from the closed to open position so the rise time will be reduced. However, a given change in angle 209 will result in a larger change in intensity, so the control of intensity at intermediate angles will be less precise.

The plate 201 must be sufficiently rigid that is does not flex when rotated at high angular accelerations. It must also have a small enough mass that the actuator can cause it to rotate at high angular accelerations. In some embodiments a thin plate of high stiffness, low density material will be used.

Whilst the present invention has been described and illustrated with reference to particular embodiments, it will be appreciated by those of ordinary skill in the art that the invention lends itself to many different variations not specifically illustrated herein.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

## Claims

1. A method of simulating a light source having a light intensity profile that varies in time, the method including the steps of:
providing a simulation light source;
using a mask to at least partially block light emitted by the simulation light source; and
adjusting the position of the mask in accordance with an electrical signal representative of the light intensity profile so as to adjust the extent to which the mask blocks light from the simulation light source, and thereby providing the simulated light intensity profile that varies in time.

2. A method according to claim 1, wherein the simulation light source has a substantially uniform light intensity profile over time.

3. A method according to claim 1 or claim 2, wherein the mask comprises a plurality of transmission regions and the method includes the step of adjusting the position of the mask so as to adjust the extent to which light is transmitted from the simulation light source via the transmission regions.

4. A method according to any preceding claim, wherein the position of the mask is adjusted by tilting the mask so that the apparent size of the transmission regions when viewed from the simulation light source is altered.

5. A method according to claim 4, wherein the pitch of the transmission regions in a direction in the plane of the mask is less than twice the transmission region dimension in the direction in the plane of the mask.

6. A method according to any one of claims 1 to 3, wherein the position of the mask is adjusted by translating the mask with respect to a second mask having a plurality of transmission regions, so that an overlap of the transmission regions of the two masks when viewed from the simulation light source is altered.

7. A method according to any preceding claim, wherein the position of the mask is adjusted from a closed position, in which substantially all the light from the simulation light source is blocked by the mask, to an open position, in which a minimum amount of light from the simulation light source is blocked by the mask, in a time of not more than 15 ms.

8. A method according to any one of claims 3 to 7, wherein the transmission regions are transparent windows in an opaque plate.

9. A method according to claim 8, wherein the light intensity profile of the light source being simulated is an infra-red light intensity profile, the simulation light source is an infra-red light source, and the opaque plate comprises an infra-red blocker, wherein the opaque areas of the plate comprise the infra-red blocker and the transparent window areas of the plate do not comprise the infra-red blocker.

10. A method according to claim 9, wherein the opaque plate comprises a silicon substrate.

11. A method according to any of claims 3 to 10, wherein the transmission regions have a size of from 100 micrometres to 500 micrometres.

12. A method according to any of claims 3 to 11, wherein the plurality of transmission regions includes at least 2000 transmission regions.

13. A method according to any preceding claim, wherein the method includes the step of expanding the beam from the simulation light source, before the beam reaches the mask.

14. A device for simulating a light source having a light intensity profile that varies in time, the device comprising:
a mask to at least partially block light from a simulation light source; and
an actuator for adjusting the position of the mask in accordance with an electrical signal representative of the light intensity profile so that the extent to which the mask blocks light from the simulation light source is adjustable to provide the light intensity profile that varies in time.

15. A device according to claim 14, further comprising the simulation light source.
